(19) **Europäisches Patentamt / European Patent Office / Office européen des brevets**

(11) **EP 1 710 948 B1**

(12) **EUROPEAN PATENT SPECIFICATION**

(45) Date of publication and mention
of the grant of the patent:
**14.03.2007 Bulletin 2007/11**

(51) Int Cl.:
***H04L 9/08*** (2006.01)

(21) Application number: **05102639.1**

(22) Date of filing: **04.04.2005**

(54) **Securing a Communicaton Link Between Devices**

Sicherung einer Kommunikationsverbindung zwischen Geräten.

Sécurisation d'une liaison de communication entre des dispositifs.

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(43) Date of publication of application:
**11.10.2006 Bulletin 2006/41**

(73) Proprietor: **Research In Motion Limited**
**Waterloo, Ontario N2L 3W8 (CA)**

(72) Inventors:
• **Brown, Michael K**
**N2M 2Z2, Kitchener (CA)**
• **Little, Herb**
**N2T 2V8, Waterloo (CA)**

• **Brown, Michael S**
**N2K 4B1, Waterloo (CA)**
• **Adams, Neil**
**N2K 4E4, Waterloo (CA)**
• **McCallum, Michael**
**N2A 4B8, Kitchener (CA)**
• **Davis, Dinah**
**N2L 2J3, Waterloo, (CA)**

(74) Representative: **Rickard, David John et al**
**ipulse**
**9-10 Savile Row**
**London W1S 3PF (GB)**

(56) References cited:
**WO-A-00/02358**       **US-A1- 2002 076 054**
**US-A1- 2003 041 244**       **US-A1- 2004 184 606**

**EP 1 710 948 B1**

## Description

In general, wireless communication is insecure and vulnerable to attacks. Various techniques may be employed to secure a wireless communication link or to make it less vulnerable to attacks. For example, cryptographic techniques may be employed to secure a wireless communication link. In symmetric-key systems (also known as "secret-key systems"), a single, common cryptographic key is stored by two communication devices. In public-key systems (also known as "public-private pair systems"), each communication device stores its own private key and freely distributes its own public key.

Various security concerns exist with the use of cryptographic techniques. For example, secrets need to be shared between the two communication devices in a secure and authenticated manner. Especially in the case of mobile devices, it may be desirable to have only those two devices know the secret and not require the intervention/involvement of an Information Technology (IT) administrator. Also, it may be desirable to verify that the devices share a secret without exposing that secret to others, and to use the secret to generate a key to secure a communication link between the devices.

US2002/076054 discloses how a public key used for creating a session shared key is inserted into a packet transmitted by a wireless terminal to an access point based on a DHCP. A public key used for creating the session shared key is inserted into a packet transmitted by the access point to the wireless terminal based on the DHCP. The access point creates the session shared key based on the public key and the wireless terminal creates the session shared key based on the public key. As a result, it becomes possible to safely share the session shared key K for privacy and/or authentication between the wireless terminal and the access point.

US2004/184606 discloses a method for permitting encrypted communications between two stations which are operable with encryption algorithms that accept encryption keys having work factors with different values.

In a main aspect, the present invention provides a method for securing a communication link between a first device and a second device, the method comprising: generating a first cryptographic key; generating a second cryptographic key that differs from said first cryptographic key; applying a hash function to packets communicated over said communication link to create a hash result; and applying said hash function to said first cryptographic key, said second cryptographic key and said hash result to generate a third cryptographic key to be used to secure said communication link.

In a further aspect, the present invention provides a device comprising: a communication interface through which said device is able to establish a communication link with another device; a processor; and means to generate a first cryptographic key, characterized by means to generate a second cryptographic key that differs from said first cryptographic key, means to apply a hash function to packets communicated over said communication link to create a hash result, and means to apply said hash function to said first cryptographic key, said second cryptographic key and said hash result to generate a third cryptographic key.

In yet a further aspect, the present invention provides a machine readable medium comprising code means executable in a processor of a device to cause said device to generate a first cryptographic key, generate a second cryptographic key that differs from said first cryptographic key, apply a hash function to packets communicated over a communication link with another device to create a hash result, and apply said hash function to said first cryptographic key, said second cryptographic key and said hash result to generate a third cryptographic key.

BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

Figure 1 is a schematic diagram of an exemplary system;

Figure 2 is a flowchart of an exemplary method to be implemented by the devices in the system of Figure 1;

Figure 3 is a flowchart of an exemplary method for establishing a secret between two devices;

Figure 4 is a flowchart of an exemplary method for generating a symmetric key from a secret;

Figure 5 is a flowchart of an exemplary method for generating a symmetric key; and

Figure 6 is a block diagram of the exemplary system of Figure 1.

It will be appreciated that for simplicity and clarity of illustration, elements shown in the figures have not necessarily been drawn to scale. For example, the dimensions of some of the elements may be exaggerated relative to other elements for clarity.

DETAILS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

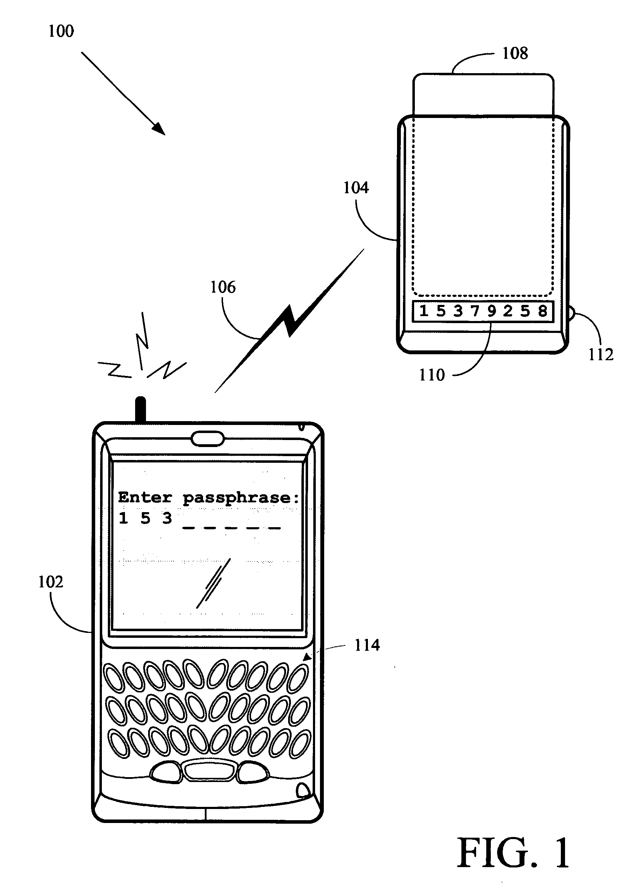

Reference is made to Figure 1, which is a schematic diagram of an exemplary system, according to some embodiments of the invention. A system 100 includes a mobile device 102 and a wireless smart card reader 104. Mobile device 102 and smart card reader 104 are able to communicate over a wireless communication link 106. A non-exhaustive list of examples of wireless local area network standards for wireless communication link 106 includes the Institute of Electrical and Electronic Engineers (IEEE) for Wireless LAN MAC and Physical layer (PHY) 802.11 a, b, g and n specifications or future related standards, the Bluetooth® standard, the Zigbee™ standard and the like.

A smart card 108 is shown inserted into smart card reader 104. Smart cards are personalized security devices, defined by the ISO7816 standard and its derivatives, as published by the International Organization for Standardization. A smart card may have a form factor of a credit card and may include a semiconductor device. The semiconductor device may include a memory that can be programmed with a secret key and with an authentication certificate, and may include a decryption engine, e.g., a processor and/or dedicated decryption logic. A smart card may include a connector for powering the semiconductor device and performing serial communication with an external device. Alternatively, smart card functionality may be embedded in a device having a different form factor and different communication protocol, for example a Universal Serial Bus (USB) device. The person whose security information is stored on smart card 108 may use smart card reader 104 for identification and to digitally sign and/or decrypt messages sent by device 102.

For example, mobile device 102 may be able to send and receive e-mail messages via an e-mail server (not shown). If, for example, the Secure Multipurpose Internet Mail Extensions (S/MIME) protocol is used, e-mail messages received at mobile device 102 are encrypted using a symmetric algorithm with a random session key generated by the sender of the e-mail message. The e-mail message also includes the session key, encrypted using the public key of the recipient. Upon receipt of an encrypted e-mail message, mobile device 102 may extract the encrypted session key and send it to smart card reader 104 via communication link 106. Smart card reader 104 may send the encrypted session key to smart card 108, and the decryption engine of smart card 108 may decrypt the encrypted session key using the recipient's private decryption key, which is stored in smart card 108. Smart card reader 104 may retrieve the decrypted session key from smart card 108 and forward it to mobile device 102 via communication link 106 so that mobile device 102 can decrypt the received e-mail message. The smart card 108 may prevent unauthorized use of the recipient's private decryption key by requiring that a password or personal identification number (PIN) be supplied before allowing the decryption operation to proceed.

Similarly, to add a digital signature to an e-mail message being sent by mobile device 102, mobile device 102 may send a hash of the contents of the e-mail message to smart card reader 104 over communication link 106. Smart card reader 104 may pass the hash to smart card 108, which may produce a digital signature from the hash and the sender's private signing key, which is stored in smart card 108. Smart card 108 may then pass the digital signature to smart card reader 104, which may forward it to mobile device 102 via communication link 106 so that mobile device 102 can transmit it along with the e-mail message to the e-mail server. Again, smart card 108 may prevent unauthorized use of the recipient's private signing key by requiring that a password or PIN be supplied before allowing the signing operation to proceed.

The unencrypted session key should be sent securely over communication link 106 from smart card reader 104 to mobile device 102 to prevent a third party from retrieving the session key from communication link 106. Similarly, the hash to be signed should be sent authentically over communication link 106 from smart card reader 104 to mobile device 102 to prevent a third party from modifying the hash and thereby causing smart card 108 to produce a signature using a hash different from the hash of the intended message. Smart card reader 104 and mobile device 102 may each store a common, symmetric key and use a symmetric algorithm to secure communications over communication link 106. Alternatively, smart card reader 104 and mobile device 102 may store their own private keys and each other's public keys, and use an asymmetric algorithm combined with a symmetric algorithm to secure communications over communication link 106.

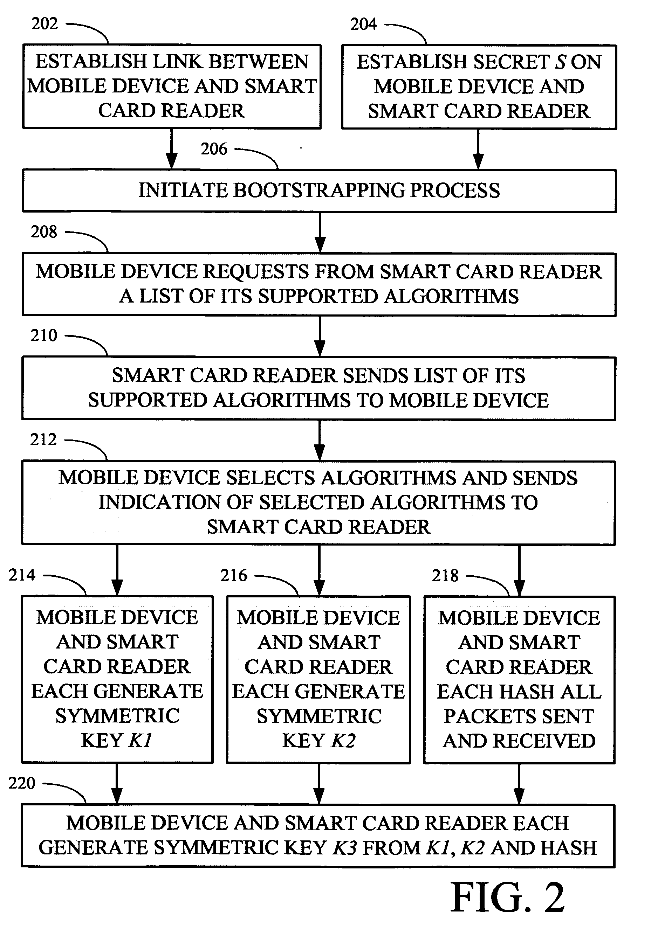

In order to establish the symmetric key used to secure communications over communication link 106, mobile device 102 and smart card reader 104 may use the following method, as illustrated in the flowchart of Figure 2, to which reference is additionally made.

At 202, a link between mobile device 102 and smart card reader 104 is established. This link may be, for example, wireless communication link 106.

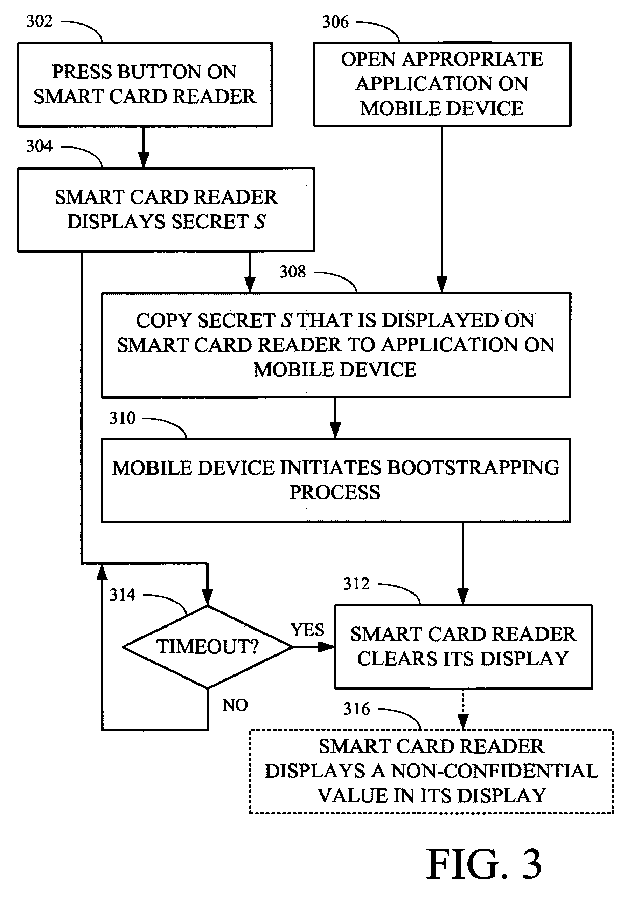

At 204, a short secret $S$ is established locally at mobile device 102 and smart card reader 104. Any method to establish the short secret $S$ securely and authentically is suitable. By "locally", it is meant that the establishment of this secret does not require any involvement or intervention by an Information Technology (IT) administrator. Moreover, since the user of mobile device 102 and smart card reader 104 will perform the method of Figure 2 on an as-needed basis, the establishment of the secret ought to be a simple procedure. An exemplary method to establish the short secret $S$ using a display 110 is described hereinbelow with respect to Figure 3.

Establishing the connection between mobile device 102 and smart card reader 104 may occur before, after or concurrently with establishing the short secret $S$ locally on mobile device 102 and smart card reader 104.

Once the connection between mobile device 102 and smart card reader 104 has been established and the short secret $S$ has been established locally on mobile device 102 and smart card reader 104, a "bootstrapping" process to generate a strong secret from the short secret S is initiated at 206. For example, the short secret S may originate at smart card reader 104, and once it has been shared with mobile device 102, mobile device 102 may initiate the bootstrapping process by sending an appropriate message (or just a packet) to smart card reader 104 over communication link 106.

The bootstrapping process involves at least one public key algorithm, at least one symmetric key algorithm, at least one hashing function, and any other security or non-security related information such as a compression algorithm. A non-exhaustive list of examples of public key algorithms includes Diffie-Hellman (DH) on a large prime-order finite group and DH on an elliptical curve (EC) group. At 208, mobile device 102 requests from smart card reader 104 a list of its supported algorithms. At 210, smart card reader 104 sends a list of its supported algorithms to mobile device 102.

At 212, mobile device 102 selects the algorithms to be used in the subsequent steps of the method and sends an indication of the selected algorithms to smart card reader 104. The selected algorithms include:

a) one or two selected public key algorithms (e.g. the parameters or the name of the elliptic curve group, or the prime and generator of the large prime-order finite group);

b) a selected symmetric key algorithm (e.g. Advanced Encryption Standard (AES) and the key size, or Triple Data Encryption Standard (DES), or the like); and

c) a selected hash function (e.g., Message Digest 5 (MD5), Secure Hashing Algorithm 1 (SHA-1), SHA-256, or the like).

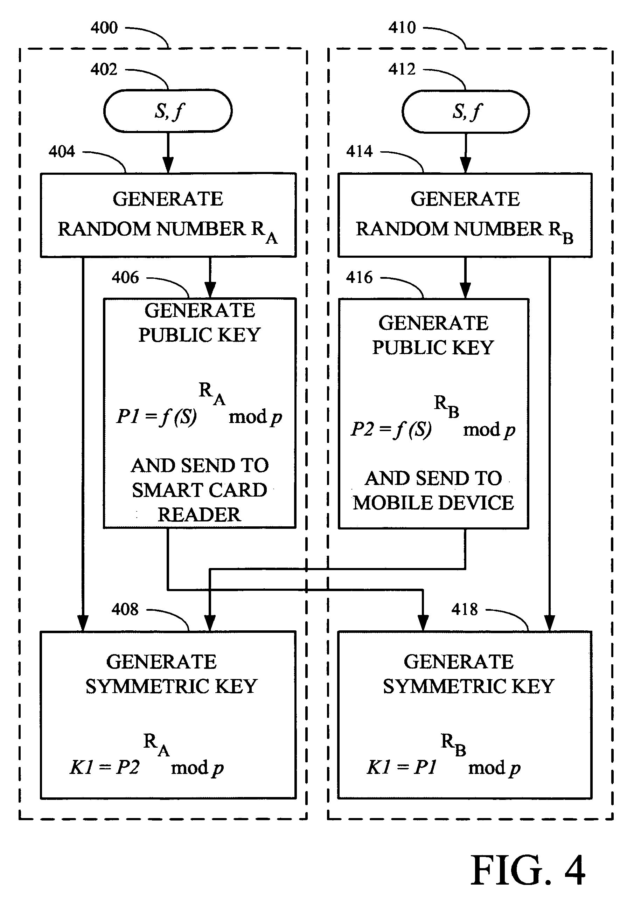

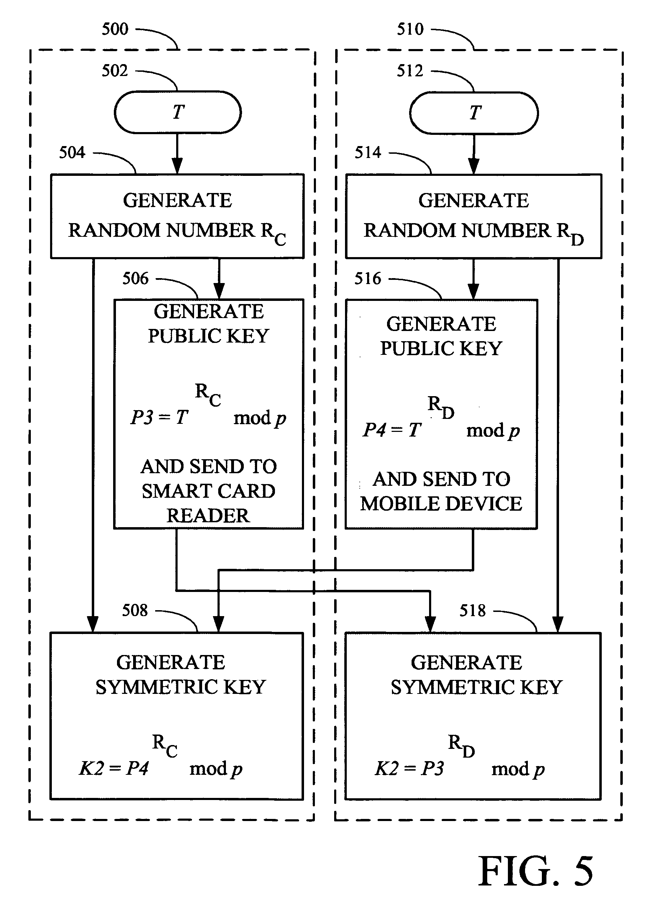

At 214, mobile device 102 and smart card reader 104 each generate the same symmetric key $K1$ from the short secret S, as described in further detail hereinbelow with respect to Figure 4. At 216, mobile device 102 and smart card reader 104 each generate the same symmetric key $K2$, as described in further detail hereinbelow with respect to Figure 5. Generating symmetric key $K1$ may occur before, after or concurrently with generating symmetric key $K2$.

At 216, mobile device 102 and smart card reader 104 each hash all the packets sent and received during the generation of symmetric keys $K1$ and $K2$ to produce the hash result $H$. For example, the selected hash function may be applied to the packets as the packets are sent and received, so that this is concurrent with generating the symmetric keys $K1$ and $K2$. In another example, the packets may be stored in a buffer and then the selected hash function may be applied to the packets after the symmetric keys $K1$ and $K2$ have been generated.

Once symmetric keys $K1$ and $K2$ have been generated, and mobile device 102 and smart card reader 104 have produced the hash result $H$, mobile device 102 and smart card reader 104 each generate the same symmetric key $K3$ from $K1, K2$ and the hash result $H$. For example, the selected hash function may be used to combine keys $K1$ and $K2$ and the hash result $H$ into $K3$.

Symmetric key $K3$ may then be used to secure communications over communication link 106.

Reference is now made to Figure 3, which is a flowchart of an exemplary method for establishing a secret between two devices, according to some embodiments of the invention. At 302, a user may press a button 112 (Figure 1) or other suitable input component of smart card reader 104, which will cause the short secret S, for example, "15379258", to be shown on display 110 of smart card reader 104 at 304. At 306, a user may open an appropriate application on mobile device 102. Causing the short secret S to be shown on display 110 may occur before, after or concurrently with opening the appropriate application on mobile device 102.

Once the short secret S has been shown on display 110 and the appropriate application has been opened on mobile device 102, the user may copy the short secret S to the application on mobile device 102 at 308 using an input component of mobile device 102, for example a keyboard 114. As illustrated in Figure 1, the user has entered the first 3 digits of the 8-digit passphrase that is the short secret S. Although this example uses a numerical value for short secret S, any type of value may be used providing the value can be shown in display 110 and inputted using the input component of mobile device 102. Since the short secret S is short, it is simple for the user to copy the secret to the application on mobile device 102. However, the short secret S is too short to be suitable for use as a reliable symmetric key. Copying the short secret S to the application on mobile device 102 may result in mobile device 102 initiating the bootstrapping process (an example of block 206 of Figure 2) at 310, for example, by sending an appropriate message (or just a packet) to smart card reader 104 over communication link 106.

To protect the short secret S from prying eyes, at 312, smart card reader 104 may clear display 110 once smart card reader 104 receives the message or packet sent by mobile device 102 to initiate the bootstrapping process.

Smart card reader 104 may also implement a timeout, and if, as checked at 314, the message or packet initiating the bootstrapping process has not been received by smart card reader 104 within the predefined period of time, which may be calculated, for example, from the time that the secret S is first shown on display 110, smart card reader 104 may clear display 110.

Once smart card reader 104 has cleared display 110, smart card reader 104 may optionally show a non-confidential (possibly random) value on display 110 so that a snooper looking at display 110 will not know whether the value on display 110 is the secret or not.

Reference is now made to Figure 4, which is a flowchart of an exemplary method for generating symmetric key *K1* from the short secret *S*. The method of Figure 4 is based on the simplified password-based exponential key exchange (SPEKE) method described in U.S. Patent No. 6,226,383 to Jablon. All variations of the SPEKE method are suitable for generating symmetric key *K1* from the short secret *S*.

The method includes a portion 400 to be implemented by mobile device 102 and a portion 410 to be implemented by smart card reader 104. At 402, mobile device 102 has possession of the secret *S* and one of the selected public key algorithms. For example, if the selected public key algorithm for generating symmetric key *K1* is DH on a large prime-order finite group for a particular prime *p*, the function *f*, when applied to the secret *S*, results in a generator of the group. U.S. Patent No. 6,226,383 discusses factors to consider when selecting function *f*. Similarly, at 412, smart card reader 104 has possession of the secret *S* and the selected public key algorithm for generating symmetric key *K1*.

At 404, mobile device 102 generates a random number $R_A$ in the range of 2 to *p*-1. Then at 406, mobile device 102 generates a short-term public key $P_1$ by raising the generator *f(S)* to the power $R_A$ within the group and sends public key $P_1$ to smart card reader 104. In the example of DH on the large prime-order finite group for *p*, this is calculated as follows:

$$P_1 = f(S)^{R_A} \bmod p$$

Similarly, at 414, smart card reader 104 generates a random number $R_B$ in the range of 2 to *p*-1. Then at 416, smart card reader 104 generates a short-term public key $P_2$ by raising the generator *f(S)* to the power $R_B$ within the group and sends public key $P_2$ to mobile device 102. In the example of DH on the large prime-order finite group for *p*, this is calculated as follows:

$$P_2 = f(S)^{R_B} \bmod p$$

Generating the random number $R_B$ at smart card reader 104 and generating public key $P_2$ and sending it to mobile device 102 may occur before, after or concurrently with generating the random number $R_A$ at mobile device 102 and generating public key $P_1$ and sending it to smart card reader 104.

Once mobile device 102 has generating the random number $R_A$ and has received public key $P_2$, mobile device 102 generates a symmetric key *K1* at 408. In the example of DH on the large prime-order finite group for *p*, the symmetric key *K1* is calculated as follows:

$$K1 = P_2^{R_A} \bmod p = f(S)^{R_B R_A} \bmod p$$

Once smart card reader 104 has generating the random number $R_B$ and has received public key $P_1$, smart card reader 104 generates the symmetric key *K1* at 418. In the example of DH on the large prime-order finite group for *p*, the symmetric key *K1* is calculated as follows:

$$K1 = P_1^{R_B} \bmod p = f(S)^{R_A R_B} \bmod p$$

Since the operations on the elements of the group are commutative, the two calculations (at mobile device 102 and smart card reader 104) yield the same symmetric key. Generating the symmetric key *K1* at mobile device 102 may occur before, after or concurrently with generating the symmetric key *K1* at smart card reader 104.

Reference is now made to Figure 5, which is a flowchart of an exemplary method for generating symmetric key *K2*. The method of Figure 5 is based on well-known Diffie-Hellman exponential key exchange techniques.

The method includes a portion 500 to be implemented by mobile device 102 and a portion 510 to be implemented by smart card reader 104. At 502, mobile device 102 has possession of one of the selected public key algorithms, which may be the same as or different from the selected public key algorithm used to generate symmetric key *K1*. For example, if the selected public key algorithm for generating symmetric key *K2* is DH on a large prime-order finite group for a particular prime *p*, mobile device 102 has possession of a known, published generator *T* of the group. Similarly, at 512, smart card reader 104 has possession of the selected public key algorithm for generating symmetric key *K2*.

At 504, mobile device 102 generates a random number $R_C$ in the range of 2 to *p*-1. Then at 506, mobile device 102 generates a short-term public key *P3* by raising the generator *T* to the power $R_C$ within the group and sends public key *P3* to smart card reader 104. In the example of DH on the large prime-order finite group for *p*, this is calculated as follows:

$$P3 = T^{R_C} \bmod p$$

Similarly, at 514, smart card reader 104 generates a random number $R_D$ in the range of 2 to *p*-1. Then at 516, smart card reader 104 generates a short-term public key *P4* by raising the generator *T* to the power $R_D$

within the group and sends public key *P4* to mobile device 102. In the example of DH on the large prime-order finite group for *p*, this is calculated as follows:

$$P4 = T^{R_D} \bmod p$$

Generating the random number $R_D$ at smart card reader 104 and generating public key *P4* and sending it to mobile device 102 may occur before, after or concurrently with generating the random number $R_C$ at mobile device 102 and generating public key *P3* and sending it to smart card reader 104.

Once mobile device 102 has generating the random number $R_C$ and has received public key *P4*, mobile device 102 generates a symmetric key *K2* at 508. In the example of DH on the large prime-order finite group for *p*, the symmetric key *K2* is calculated as follows:

$$K2 = P4^{R_C} \bmod p = T^{R_D R_C} \bmod p$$

Once smart card reader 104 has generating the random number $R_D$ and has received public key *P3*, smart card reader 104 generates the symmetric key *K2* at 518. In the example of DH on the large prime-order finite group for *p*, the symmetric key *K2* is calculated as follows:

$$K2 = P3^{R_D} \bmod p = T^{R_C R_D} \bmod p$$

Since the operations on the elements of the group are commutative, the two calculations (at mobile device 102 and smart card reader 104) yield the same symmetric key. Generating the symmetric key *K2* at mobile device 102 may occur before, after or concurrently with generating the symmetric key *K2* at smart card reader 104.

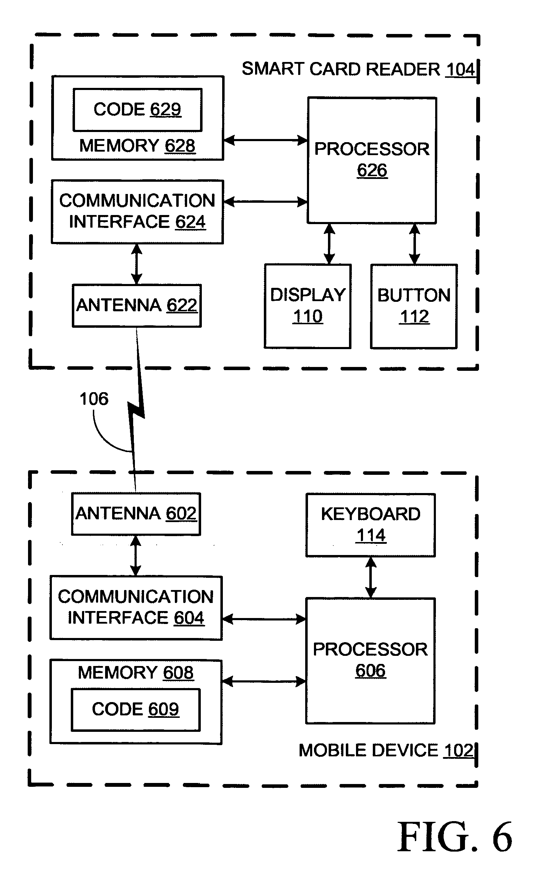

Figure 6 is a block diagram of system 100, according to some embodiments of the invention. For clarity, some components of mobile device 102 and smart card reader 104 are not shown in Figure 6 and are not described explicitly below.

Mobile device 102 includes an antenna 602 and smart card reader 104 includes an antenna 622. A non-exhaustive list of examples for antennae 602 and 622 includes dipole antennae, monopole antennae, multilayer ceramic antennae, planar inverted-F antennae, loop antennae, shot antennae, dual antennae, omnidirectionale antenna and any other suitable antennae.

Mobile device 102 also includes a communication interface 604 coupled to antenna 602. Smart card reader 104 includes a communication interface 624 coupled to antenna 604. A non-exhaustive list of examples for standards with which communication interfaces 604 and 624 may be compatible includes 802.11 a, b, g and n and future related standards, the Bluetooth® standard, the Zigbee™ standard and the like.

Mobile device 102 also includes a processor 606 coupled to communication interface 604 and to keyboard 114. Mobile device 102 also includes a memory 608, which may be fixed in or removable from mobile device 102. Memory 608 may be coupled to processor 606 or partly embedded in processor 606. Communication interface 604 and processor 606 may be part of the same integrated circuit or in separate integrated circuits. Similarly, processor 606 and memory 608 may be part of the same integrated circuit or in separate integrated circuits.

Smart card reader 104 also includes a processor 626 coupled to communication interface 624, to display 110 and to button 112. Smart card reader 104 also includes a memory 628, which may be fixed in or removable from smart card reader 104. Memory 628 may be coupled to processor 626 or partly embedded in processor 626.
Communication interface 624 and processor 626 may be part of the same integrated circuit or in separate integrated circuits. Similarly, processor 626 and memory 628 may be part of the same integrated circuit or in separate integrated circuits.

A non-exhaustive list of examples for processors 606 and 626 includes a central processing unit (CPU), a digital signal processor (DSP), a reduced instruction set computer (RISC), a complex instruction set computer (CISC) and the like. Furthermore, processors 606 and 626 may be part of an application specific integrated circuit (ASIC) or may be a part of an application specific standard product (ASSP).

A non-exhaustive list of examples for memories 606 and 626 includes any combination of the following:

  a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;

  b) optical devices, such as compact disk read only memory (CD ROM), and the like; and

  c) magnetic devices, such as a hard disk, a floppy disk, a magnetic tape, and the like.

Memory 608 may store executable code 609 which, when executed by processor 606, may cause mobile device 102 to implement relevant portions of any or a combination of the methods of Figures 2, 3, 4 and 5.

Memory 628 may store executable code 629 which, when executed by processor 626, may cause smart card reader 104 to implement relevant portions of any or a combination of the methods of Figures 2, 3, 4 and 5.

The preceding explanation uses the example of mobile device 102, smart card reader 104 and wireless communication link 106. However, embodiments of the invention are equally applicable to any two devices (not necessary mobile devices) where the security and/or authenticity of the communication link (not necessarily wireless) between the two devices are possibly unsatisfactory.

While certain features of the invention have been illustrated and described herein, many modifications, substitutions, changes, and equivalents will now occur to those of ordinary skill in the art. It is, therefore, to be understood that the appended claims are intended to cover all such modifications and changes.

**Claims**

1. A method for securing a communication link (106) between a first device (102) and a second device (104), the method comprising:

   generating a first cryptographic key; the method being **characterized by** the steps of:

   generating a second cryptographic key that differs from said first cryptographic key; applying a hash function to packets communicated over said communication link (106) to create a hash result; and applying said hash function to said first cryptographic key, said second cryptographic key and said hash result to generate a third cryptographic key to be used to secure said communication link (106).

2. The method of claim 1, wherein said packets were communicated over said communication link (106) during generation of said first cryptographic key and during generation of said second cryptographic key.

3. The method of claim 1 or claim 2, wherein generating said first cryptographic key comprises an exchange of public keys between said first device (102) and said second device (104) over said communication link (106), said public keys based on a secret shared by said first device (102) and said second device (104).

4. The method of any one of claims 1 to 3, wherein generating said second cryptographic key comprises an exchange of public keys between said first device (102) and said second device (104) over said communication link (106).

5. The method of claim 3, wherein generating said first cryptographic key comprises:

   applying a function to said secret to obtain a generator element of a mathematical group; raising said generator element to a first random number to obtain another element of said group; sending said other element over said communication link (106); receiving over said communication link (106) a further element of said group, said further element having been created by raising said generator element to a second random number; and raising said further element to said first random number to obtain said first cryptographic key.

6. The method of any one of claims 1 to 5, wherein generating said second cryptographic key comprises:

   raising a known generator element of a mathematical group to a first random number to obtain another element of said group; sending said other element over said communication link (106); receiving over said communication link (106) a further element of said group, said further element having been created by raising said known generator element to a second random number; and raising said further element to said first random number to obtain said second cryptographic key.

7. A device (102, 104) comprising:

   a communication interface (604, 624) through which said device (102, 104) is able to establish a communication link (106) with another device (104, 102); a processor (606, 626); and means to generate a first cryptographic key, **characterized by** means to generate a second cryptographic key that differs from said first cryptographic key, means to apply a hash function to packets communicated over said communication link (106) to create a hash result, and means to apply said hash function to said first cryptographic key, said second cryptographic key and said hash result to generate a third cryptographic key.

**8.** The device (102, 104) of claim 7, wherein said device is arranged such that said packets are communicated over said communication link (106) during generation of said first cryptographic key and during generation of said second cryptographic key.

**9.** The device of claim 7 or 8, wherein said device (102, 104) and said other device (104, 102) are arranged to share a secret and said first cryptographic key is based upon said secret.

**10.** The device of any one of claims 7 to 9, wherein said device (102, 104) is arranged to generate said first cryptographic key from an exchange of public keys with said other device (104, 102) over said communication link (106).

**11.** The device of any one of claims 7 to 10, wherein said device (102, 104) is arranged to generate said second cryptographic key from an exchange of public keys with said other device (104, 102) over said communication link (106).

**12.** A machine readable medium (608, 628) comprising code means (609, 629) executable in a processor (606, 626) of a device (102, 104) to cause said device to generate a first cryptographic key, generate a second cryptographic key that differs from said first cryptographic key, apply a hash function to packets communicated over a communication link (106) with another device (104, 102) to create a hash result, and apply said hash function to said first cryptographic key, said second cryptographic key and said hash result to generate a third cryptographic key.

**Patentansprüche**

**1.** Ein Verfahren zur Sicherung einer Kommunikationsverbindung (106) zwischen einem ersten Gerät (102) und einem zweiten Gerät (104), wobei das Verfahren umfasst:

das Erzeugen eines ersten kryptografischen Schlüssels; wobei das Verfahren durch die folgenden Schritte **gekennzeichnet** ist:

das Erzeugen eines zweiten kryptografischen Schlüssels, der sich vom ersten kryptografischen Schlüssel unterscheidet; das Anwenden einer Hashfunktion auf Pakete, die über die Kommunikationsverbindung (106) übertragen werden, zur Erzeugung eines Hashergebnisses; und das Anwenden der Hashfunktion auf den ersten kryptografischen Schlüssel, den zweiten kryptografischen Schlüssel und das Hashergebnis zur Erzeugung eines dritten kryptografischen Schlüssels, der zur Sicherung der Kommunikationsverbindung (106) verwendet wird.

**2.** Das Verfahren gemäß Anspruch 1, wobei die Pakete während der Erzeugung des ersten kryptografischen Schlüssels und während der Erzeugung des zweiten kryptografischen Schlüssels über die Kommunikationsverbindung (106) übertragen wurden.

**3.** Das Verfahren gemäß Anspruch 1 oder Anspruch 2, wobei die Erzeugung des ersten kryptografischen Schlüssels einen Austausch öffentlicher Schlüssel zwischen dem ersten Gerät (102) und dem zweiten Gerät (104) über die Kommunikationsverbindung (106) beinhaltet und die öffentlichen Schlüssel auf einem vom ersten Gerät (102) und vom zweiten Gerät (104) geteilten Geheimcode basieren.

**4.** Das Verfahren gemäß jedem der Ansprüche 1 bis 3, wobei die Erzeugung des zweiten kryptografischen Schlüssels einen Austausch öffentlicher Schlüssel zwischen dem ersten Gerät (102) und dem zweiten Gerät (104) über die Kommunikationsverbindung (106) beinhaltet.

**5.** Das Verfahren gemäß Anspruch 3, wobei das Erzeugen des ersten kryptografischen Schlüssel umfasst:

das Anwenden einer Funktion auf den Geheimcode zur Berechnung eines Erzeugungselements einer mathematischen Gruppe; des Potenzieren des Erzeugungselements mit einer ersten Zufallszahl zur Berechnung eines weiteren Elements der Gruppe; das Übertragen des weiteren Elements über die Kommunikationsverbindung (106); das Empfangen eines weiteren Elements der Gruppe über die Kommunikationsverbindung (106), wobei das weitere Element durch Potenzieren des Erzeugungselements mit einer zweiten Zufallszahl erzeugt wurde; und das Potenzieren des weiteren Elements mit der ersten Zufallszahl zur Berechnung des ersten kryptografischen Schlüssels.

**6.** Das Verfahren gemäß jedem der Ansprüche 1 bis 5, wobei das Erzeugen des zweiten kryptografischen Schlüssels umfasst:

des Potenzieren eines bekannten Erzeugungselements einer mathematischen Gruppe mit einer ersten Zufallszahl zur Berechnung eines weiteren Elements der Gruppe; das Übertragen des weiteren Elements über die Kommunikationsverbindung (106); das Empfangen eines weiteren Elements der Gruppe über die Kommunikationsverbindung (106), wobei das weitere Element durch Potenzieren des bekannten Erzeugungselements mit einer zweiten Zufallszahl erzeugt wurde; und das Potenzieren des weiteren Elements mit der ersten Zufallszahl zur Berechnung des zweiten kryptografischen Schlüssels.

7. Ein Gerät (102, 104), das umfasst:

eine Kommunikationsschnittstelle (604, 624), über die das Gerät (102, 104) eine Kommunikationsverbindung (106) mit einem anderen Gerät (104, 102) herstellen kann; einen Prozessor (606, 626); und Mittel zum Erzeugen eines ersten kryptografischen Schlüssels, **gekennzeichnet durch** Mittel zum Erzeugen eines zweiten kryptografischen Schlüssels, der sich vom ersten kryptografischen Schlüssel unterscheidet; Mittel zum Anwenden einer Hashfunktion auf Pakete, die über die Kommunikationsverbindung (106) übertragen werden, zur Erzeugung eines Hashergebnisses; und Mittel zum Anwenden der Hashfunktion auf den ersten kryptografischen Schlüssel, den zweiten kryptografischen Schlüssel und das Hashergebnis zur Erzeugung eines dritten kryptografischen Schlüssels.

8. Das Gerät (102, 104) gemäß Anspruch 7, wobei dieses Gerät so ausgelegt ist, dass die Pakete während der Erzeugung des ersten kryptografischen Schlüssels und während der Erzeugung des zweiten kryptografischen Schlüssels über die Kommunikationsverbindung (106) übertragen werden.

9. Das Gerät gemäß Anspruch 7 oder Anspruch 8, wobei das Gerät (102, 104) und das andere Gerät (104, 102) so ausgelegt sind, dass sie einen Geheimcode teilen und der erste kryptografische Schlüssel auf diesem Geheimcode basiert.

10. Das Gerät gemäß jedem der Ansprüche 7 bis 9, wobei das Gerät (102, 104) so ausgelegt ist, dass es den ersten kryptografischen Schlüssel durch einen Austausch öffentlicher Schlüssel mit dem anderen Gerät (104, 102) über die Kommunikationsverbindung (106) erzeugt.

11. Das Gerät gemäß jedem der Ansprüche 7 bis 10, wobei das Gerät (102, 104) so ausgelegt ist, dass es den zweiten kryptografischen Schlüssel durch einen Austausch öffentlicher Schlüssel mit dem anderen Gerät (104, 102) über die Kommunikationsverbindung (106) erzeugt.

12. Ein maschinenlesbares Medium (608, 628), bestehend aus Code (609, 629), der in einem Prozessor (606, 626) eines Geräts (102, 104) ausgeführt werden kann, als Mittel, um das Gerät zu veranlassen, einen ersten kryptografischen Schlüssel zu erzeugen; einen zweiten kryptografischen Schlüssel zu erzeugen, der sich vom ersten kryptografischen Schlüssel unterscheidet; eine Hashfunktion auf Pakete anzuwenden, die über die Kommunikationsverbindung (106) mit einem anderen Gerät (104, 102) übertragen werden um ein Hashergebnis zu erzeugen; und die Hashfunktion auf den ersten kryptografischen Schlüssel, den zweiten kryptografischen Schlüssel und das Hashergebnis anzuwenden, um einen dritten kryptografischen Schlüssel zu erzeugen.

## Revendications

1. Procédé pour sécuriser une liaison de communication (106) entre un premier dispositif (102) et un deuxième dispositif (104), le procédé comprenant :

la génération d'une première clé de chiffrement ; le procédé **se caractérisant par** les étapes suivantes :

générer une deuxième clé de chiffrement différant de ladite première clé de chiffrement ; appliquer une fonction de hachage à des paquets communiqués sur ladite liaison de communication (106) pour créer un résultat de hachage ; et appliquer ladite fonction de hachage à ladite première clé de chiffrement, à ladite deuxième clé de chiffrement et au résultat du hachage afin de générer une troisième clé de chiffrement à utiliser en vue de sécuriser la liaison de communication (106).

2. Procédé de la revendication 1 dans lequel lesdits paquets étaient communiqués sur ladite liaison de communication (106) pendant la génération de ladite première clé de chiffrement et pendant la génération de ladite deuxième clé de chiffrement.

3. Procédé de la revendication 1 ou 2 dans lequel la génération de ladite première clé de chiffrement comprend un échange de clés publiques entre ledit premier dispositif (102) et ledit deuxième dispositif (104) sur ladite liaison de communication (106), lesdites clés publiques étant basées sur un secret partagé par ledit premier dispositif (102) et ledit deuxième dispositif (104).

4. Procédé de l'une quelconque des revendications 1 à 3 dans lequel la génération de ladite deuxième clé de chiffrement comprend un échange de clés publiques entre ledit premier dispositif (102) et ledit deuxième dispositif (104) sur ladite liaison de communication (106).

5. Procédé de la revendication 3 dans lequel la génération de ladite première clé de chiffrement comprend les étapes suivantes :

appliquer une fonction audit secret pour obtenir un élément générateur d'un groupe mathématique ;
élever ledit élément générateur à un premier nombre aléatoire pour obtenir un autre élément dudit groupe ;
envoyer ledit autre élément sur ladite liaison de communication (106) ;
recevoir sur ladite liaison de communication (106) un élément complémentaire dudit groupe, ledit élément complémentaire ayant été créé par l'élévation dudit élément générateur à un deuxième nombre aléatoire ; et
élever ledit élément complémentaire audit premier nombre aléatoire pour obtenir ladite première clé de chiffrement.

6. Procédé de l'une quelconque des revendications 1 à 5 dans lequel la génération de ladite deuxième clé de chiffrement comprend les étapes suivantes :

élever un élément générateur connu d'un groupe mathématique à un premier nombre aléatoire pour obtenir un autre élément dudit groupe ;
envoyer ledit autre élément sur ladite liaison de communication (106) ;
recevoir sur ladite liaison de communication (106) un élément complémentaire dudit groupe, ledit élément complémentaire ayant été créé par l'élévation dudit élément générateur connu à un deuxième nombre aléatoire ; et
élever ledit élément complémentaire audit premier nombre aléatoire pour obtenir ladite deuxième clé de chiffrement.

7. Un dispositif (102, 104) comprenant:

une interface de communication (604, 624) par laquelle ledit dispositif (102, 104) est en mesure d'établir une liaison de communication (106) avec un autre dispositif (104, 102) ;
un processeur (606, 626); et
un moyen pour générer une première clé de chiffrement, **caractérisé par** un moyen générant une deuxième clé de chiffrement différant de ladite première clé de chiffrement ; un moyen pour appliquer une fonction de hachage à des paquets communiqués sur ladite liaison de communication (106) afin de créer un résultat de hachage, et un moyen pour appliquer ladite fonction de hachage à ladite première clé de chiffrement, à ladite deuxième clé de chiffrement et audit résultat de hachage afin de générer une troisième clé de chiffrement.

8. Dispositif (102, 104) de la revendication 7 dans lequel ledit dispositif est agencé de façon que lesdits paquets soient communiqués sur ladite liaison de communication (106) pendant la génération de ladite première clé de chiffrement et pendant la génération de ladite deuxième clé de chiffrement.

9. Dispositif de la revendication 7 ou 8 dans lequel ledit dispositif (102, 104) et ledit autre dispositif (104, 102) sont agencés pour partager un secret, et ladite première clé de chiffrement est basée sur ledit secret.

10. Dispositif de l'une quelconque des revendications 7 à 9 dans lequel ledit dispositif (102, 104) est agencé pour générer ladite première clé de chiffrement à partir d'un échange de clés publiques avec ledit autre dispositif (102, 104) sur ladite liaison de communication (106).

11. Dispositif de l'une quelconque des revendications 7 à 10 dans lequel ledit dispositif (102, 104) est agencé pour générer ladite deuxième clé de chiffrement à partir d'un échange de clés publiques avec ledit autre dispositif (102, 104) sur la liaison de communication (106).

12. Support lisible par machine (608, 628) comprenant un moyen logiciel (609, 629) exécutable dans un processeur (606, 626) sur un dispositif (102, 104) pour faire que ledit dispositif génère une première clé de chiffrement, génère une deuxième clé de chiffrement différant de ladite première clé de chiffrement, applique une fonction de hachage à des paquets communiqués sur ladite liaison de communication (106) avec un autre dispositif (104, 102) afin de créer un résultat de hachage, et appliquer ladite fonction de hachage à ladite première clé de chiffrement, à ladite deuxième clé de chiffrement et au résultat de hachage afin de générer une troisième clé de chiffrement.

FIG. 1

202 — ESTABLISH LINK BETWEEN MOBILE DEVICE AND SMART CARD READER

204 — ESTABLISH SECRET *S* ON MOBILE DEVICE AND SMART CARD READER

206 — INITIATE BOOTSTRAPPING PROCESS

208 — MOBILE DEVICE REQUESTS FROM SMART CARD READER A LIST OF ITS SUPPORTED ALGORITHMS

210 — SMART CARD READER SENDS LIST OF ITS SUPPORTED ALGORITHMS TO MOBILE DEVICE

212 — MOBILE DEVICE SELECTS ALGORITHMS AND SENDS INDICATION OF SELECTED ALGORITHMS TO SMART CARD READER

214 — MOBILE DEVICE AND SMART CARD READER EACH GENERATE SYMMETRIC KEY *K1*

216 — MOBILE DEVICE AND SMART CARD READER EACH GENERATE SYMMETRIC KEY *K2*

218 — MOBILE DEVICE AND SMART CARD READER EACH HASH ALL PACKETS SENT AND RECEIVED

220 — MOBILE DEVICE AND SMART CARD READER EACH GENERATE SYMMETRIC KEY *K3* FROM *K1*, *K2* AND HASH

## FIG. 2

302 ──

PRESS BUTTON ON
SMART CARD READER

306 ──

OPEN APPROPRIATE
APPLICATION ON
MOBILE DEVICE

304 ──

SMART CARD READER
DISPLAYS SECRET *S*

308 ──

COPY SECRET *S* THAT IS DISPLAYED ON
SMART CARD READER TO APPLICATION ON
MOBILE DEVICE

310 ──

MOBILE DEVICE INITIATES BOOTSTRAPPING
PROCESS

314 ──

TIMEOUT?

YES

NO

312 ──

SMART CARD READER
CLEARS ITS DISPLAY

316 ──

SMART CARD READER
DISPLAYS A NON-CONFIDENTIAL
VALUE IN ITS DISPLAY

FIG. 3

400

402

$$S, f$$

404

GENERATE
RANDOM NUMBER $R_A$

406

GENERATE
PUBLIC KEY

$$P1 = f(S)^{R_A} \bmod p$$

AND SEND TO
SMART CARD
READER

408

GENERATE
SYMMETRIC KEY

$$K1 = P2^{R_A} \bmod p$$

410

412

$$S, f$$

414

GENERATE
RANDOM NUMBER $R_B$

416

GENERATE
PUBLIC KEY

$$P2 = f(S)^{R_B} \bmod p$$

AND SEND TO
MOBILE DEVICE

418

GENERATE
SYMMETRIC KEY

$$K1 = P1^{R_B} \bmod p$$

# FIG. 4

500 —

502 —

$T$

504 —

GENERATE
RANDOM NUMBER $R_C$

506 —

GENERATE
PUBLIC KEY

$P3 = T^{R_C} \bmod p$

AND SEND TO
SMART CARD
READER

508 —

GENERATE
SYMMETRIC KEY

$K2 = P4^{R_C} \bmod p$

510 —

512 —

$T$

514 —

GENERATE
RANDOM NUMBER $R_D$

516 —

GENERATE
PUBLIC KEY

$P4 = T^{R_D} \bmod p$

AND SEND TO
MOBILE DEVICE

518 —

GENERATE
SYMMETRIC KEY

$K2 = P3^{R_D} \bmod p$

# FIG. 5

SMART CARD READER 104

CODE 629

MEMORY 628

PROCESSOR 626

COMMUNICATION INTERFACE 624

ANTENNA 622

DISPLAY 110

BUTTON 112

106

ANTENNA 602

KEYBOARD 114

COMMUNICATION INTERFACE 604

MEMORY 608

CODE 609

PROCESSOR 606

MOBILE DEVICE 102

FIG. 6